# EUROPEAN PATENT APPLICATION

(11) **EP 4 675 466 A1**
(43) Date of publication of application: **07.01.2026**
(21) Application number: 24186885.0
(22) Date of filing: 05.07.2024
(51) Int. Cl.: G06F 21/32, G06F 21/34, H04L 9/32, H04L 9/40

(54) **METHOD OF PERSONALIZING AN IDENTITY DOCUMENT, METHOD OF VERIFYING AN IDENTITY OF A USER AND SYSTEM FOR VERIFYING AN IDENTITY OF A USER**

(71) Applicant: Giesecke+Devrient ePayments GmbH, 81677 München (DE)
(72) Inventor: Zadeh Heidari, Mehdi, 81677 Munich (DE)
(74) Representative: LKGLOBAL Partnerschaftsgesellschaft mbB

(57) **Abstract**

The invention relates to a method of personalizing an identity document (10) and to a method of verifying an identity of a user (2). The invention also relates to a system (1) for verifying an identity of a user (2). A user application configures a user device (20) to capture an image (3) of a user (2) and to obtain biometric data of the user (2), to read a unique identifier from a chip (11) of an identity document (10) and to establish a connection to a server device (30), to request a public encryption key from the server device (30) using the unique identifier and to receive the public encryption key from the server device (30), to use the received public encryption key to encrypt the biometric data, and to transmit the encrypted biometric data to the chip (11). The chip (11) decrypts the encrypted biometric data and determines a match between the decrypted biometric data and the biometric reference data.

## Description

The present invention relates to personalization and verification techniques using biometric data. In particular, the present invention relates to a method of personalizing an identity document (ID), to a method of verifying an identity of a user as well as to a system for verifying an identity of a user.

Commonly known verification techniques encompass the usage of remote identity verification processes, for example when applying for a bank account, an insurance or other security-related services like border control services. In this case, a biometric match between a photo, e.g., a selfie, of the applicant and a photo on a government issued identity document is carried out. However, this process may cause problems. For example, if a fake identity document, e.g. an identity document in which a photo was replaced by a fake photo and/or which contains manipulated data, is used to apply for one of the above-mentioned services, it may be difficult for the service providers to correctly validate or verify the real identity of the person. As a result, the number of identity thefts may increase which requires the service providers and users to spend a huge amount of money for additional identity theft protection services.

In addition, it is expected that the number of global digital identity verification procedures will strongly increase in the future as it is a very efficient way to apply for and use various online services.

It may be seen as an object of the invention to provide an improved identity verification process.

Two methods and a system according to the features of the independent claims are provided. Further embodiments of the invention are evident from the dependent claims, the figures and the following description.

According to an aspect of the invention, a method of personalizing an identity document is provided. The method comprises providing biometric reference data of a user based on image data from an image of the user, for example based on image data from a photo of the user that is contained in an identity document (ID) card. The method further comprises encrypting the biometric reference data of the user using a public encryption key in order to provide encrypted biometric reference data of the user. The method further comprises providing a unique identifier, which for instance is specific to the user, e.g., the holder of said identity document (ID) card. The method further comprises storing the encrypted biometric reference data of the user and the unique identifier in a storage unit of the identity document, for example on an embedded chip of the identity document.

The inventive personalization method is the first step to enable an improved verification process that relies on the usage of biometric reference data stored on the identity document itself. In particular, the verification process which will be described herein below may be based on the fact that some preparational procedures including the storage of the required data and information in the identity document and/or in a server device are performed. The above-mentioned method for personalizing the identity document thus provides these preparational steps to allow a user to go through the verification process when applying for an online service, for example when applying for a bank account, an insurance or when using border control services etc.

The method of personalizing an identity document may be seen as an add-on to existing personalization processes with respect to identity documents, wherein additional information, i.e., biometric information, are stored on the identity document, in particular on a chip of the identity document, which biometric information may only be accessible via secure or encrypted channels during a verification process.

An identity document in the context of the present invention may be an identity card or ID card of a user. It may also be a driver's license or any kind of smart card. The provision of the biometric reference data of the user may include the conversion of an image or photo of the user that already exists on the identity document and/or which is visible on the identity document into biometric reference data of the user. These biometric reference data of the user may include physical data of the user, for example measurements of the body or body parts of the user, outer appearances or human characteristics of the user, etc. In particular, the biometric reference data may include facial characteristics of the user, like for example shape of the head and the facial parts like nose, eyes, ears, mouth, etc. In this manner, a biometric template can be generated that represents the biometric reference data of the user. The conversion of the image data into the biometric reference data may be performed using a suitable algorithm.

Afterwards, an operating system generates a key pair that includes the above-mentioned public encryption key and a private key. The public encryption key is used to encrypt the biometric reference data such that encrypted biometric reference data of the user, e.g., an encrypted biometric template of the user, is provided. The public encryption key may further be signed with a certificate before it is stored in in the server device. The private encryption key will later be used by the chip to decrypt encrypted biometric data of an image that is captured during the verification process. This will be described in more detail below with reference to the inventive method of verifying an identity of a user.

During the inventive personalization method, the unique identifier is provided in addition to the biometric reference data and the encryption keys. This unique identifier may be a bit label, in particular a universal unique identifier (UUID) which for instance is specific, i.e., unique, to the user, e.g., the holder of the identity document (ID). This unique identifier may be retrieved from a personal file maintained by governmental instances or the like. If a unique identifier is not available, it may be generated by the operating system.

During the inventive personalization method, user-specific information may be provided in addition to the biometric reference data, the encryption keys and the unique identifier. The user-specific information may include user details, i.e., card holder details, like user address, place of birth, etc.

After these data and information have been provided and/or retrieved, the method further comprises storing these data and information in the storage unit, e.g., on the chip, of the identity document. In particular, the encrypted biometric reference data of the user, the (signed) private encryption key and the user-specific information are stored in the storage unit of the identity document. That is, in a preferred embodiment, the storage unit of the identity document may store the private key, the encrypted biometric reference data of the user, the user-specific information and the unique identifier. The user-specific information may also be encrypted using the public encryption key and then stored in the storage unit.

The identity document may include a chip, for example an embedded or integrated chip. The chip may be a universal integrated circuit card (UICC), e.g., an embedded universal integrated circuit card (eUICC) or an integrated universal integrated circuit card (iUICC). The chip may store the above-listed data and information. The identity document may have contactless capabilities using short-range communication technologies like NFC (Near Field Communication)

The inventive method of personalizing an identity document thus provides the advantage that encrypted face biometric data taken from a photo of the identity document card can be stored on the identity document card itself such that this stored data can later be used during a verification process to discover a fake identity document, where for example a photo has been manipulated or replaced by a fake photo.

According to an embodiment, the method comprises providing a key pair including a private encryption key and the public encryption key, as well as storing the private encryption key in the storage unit of the identity document.

As explained above, the private encryption key may be stored on the identity document, e.g., on the chip of the identity document. Both the private encryption key and the public encryption key may have their own function when going through the verification process as will be described in more detail below.

According to an embodiment, the method comprises signing the public encryption key, and providing the signed public encryption key for storage in a server device.

The method further comprises storing the signed private encryption key in the storage unit, e.g., in the chip, of the identity document. This means that the above-described storing of the private encryption key in the storage unit of the identity document may comprise storing the signed private encryption key in the storage unit of the identity document.

For signing the public encryption key, a certificate from a trusted certificate issuer or provider may be used.

According to an embodiment, the method further comprises providing the public encryption key and/or the unique identifier to a server device. The public encryption key and the unique identifier may be stored in the server device.

The server device may be a remote server, a cloud server, or an HSM (Hardware Security Module), in particular a trusted server, that stores the public encryption key and the unique identifier which may be required when a user goes through the verification process, i.e., the method for verifying the identity of the user.

That is, the identity document and the server device may each store selected information which are generated during the method of personalizing the identity document and which are used during the subsequent method of verifying the identity of a user.

According to an embodiment, the biometric reference data of the user includes physical characteristics of the user derivable from the image of the user.

As explained above, the biometric reference data contains physical characteristics and/or properties of the user, in particular characteristics and/or properties of a face of the user.

According to an embodiment, the image of the user is a photo of the user contained on, e.g., printed on, the identity document.

For the personalization process, the biometric reference data can be obtained from the photo that is present on the identity document.

While the method for personalizing an identity document has been described above, the following explanations focus on the method of verifying an identity of a user.

According to an aspect of the invention, a method of verifying an identity of a user is provided. The method comprises providing an identity document having stored thereon biometric reference data, in particular encrypted biometric reference data, and a unique identifier. For example, the biometric reference data and the unique identifier may be stored on a storage unit of the identity document. The storage unit may be part of a chip that is integrated into the identity document. The method further comprises capturing an image of a user with a user device to obtain biometric data of the user and establishing a connection between the user device and a server device. This capturing of an image of a user may comprise capturing a live image of a user through a camera on the user device (i.e., Mobile Phone, Tablet, PC, ...). The method further comprises using the unique identifier to request a public encryption key from the server device and to transmit the public encryption key from the server device to the user device. The method further comprises using the transmitted public encryption key to encrypt the obtained (live) biometric data of the user and transmitting the encrypted biometric data of the user from the user device to a processing unit of the identity document. The processing unit may also be part of the chip that is integrated into the identity document. The method further comprises decrypting the encrypted biometric data of the user by the processing unit of the identity document. The method further comprises determining a match between the decrypted biometric data of the user and the biometric reference data by the processing unit of the identity document.

The inventive method of verifying an identity of a user, herein also referred to as verification method, is the second step to enable an improved verification process that relies on the usage of biometric reference data stored on the identity document itself. The above-described method for personalizing the identity document may include the preparational steps to allow a user to go through the verification process which will be described in more detail below.

The verification method may be carried out when a user attempts to apply for an online service, for example when applying for a bank account, an insurance or when using border control services etc.

The inventive verification method is based on a reliable face biometric match on a trusted chip of the identity document that exchanges data with a trusted user application, e.g., a software development kit (SDK), that is also connected to a trusted web server. By storing the encrypted face biometric taken from the photo of the identity document card and storing it securely on the chip as described above, a fake identity document can be discovered during a verification attempt. Performing a biometric match during the verification process can provide a more accurate approach for verifying the identity of the user. In other words, more reliable information is stored on the chip that can be used for verifying the identity of the user.

As a basis for the verification, there is provided the identity document on which the unique identifier and the biometric reference data, e.g., the biometric template of the user or face biometric of the user, are stored. As indicated above, the identity document may include a chip, for example an embedded or integrated chip. This chip may comprise a storage unit on which the biometric reference data and the unique identifier are stored. Other data and information like the private and the signed public key as well as the user-specific information may also be stored on the storage unit as described above. These data and information may have been stored in the storage unit during the personalization method as described above.

For starting the verification, the method comprises capturing an image of a user with a user device to obtain biometric data of the user. This biometric data may be captured in real-time or online, for example by taking a live picture of the user by a camera of the user device. The user device may be a mobile phone, e.g., a smartphone, of the user. For capturing the image, the user may use the camera and take a selfie of themselves. This selfie photo which was taken by the user may then be used as the biometric data of the user. A user application may be used to prompt the user to go through the different steps of the verification method. In particular, the user may be prompted to take the photo and then the user application continues with the further steps of the method.

Afterwards, an authentication procedure between the identity document, in particular the chip of the identity document, and the user device may be carried out. The user application may then configure the user device read out the unique identifier from the storage unit of the identity document. In general, it is noted that all method steps of the verification method may be performed by executing the user application, e.g., the SDK.

Afterwards, the method may comprise establishing a connection between the user device and a server device, for example the cloud server or web server as described above, on which the signed public key and the unique identifier are stored. The connection between the user device and the server device may be based on an internet connection or a long-range communication technology.

Afterwards, the method may comprise using, by the user device, the unique identifier which has been read out by the user device from the storage unit of the identity document in order to request the signed public encryption key from the server device and to transmit the public encryption key from the server device to the user device.

After the signed public encryption key has been transmitted from the server device to the user device, the signed public encryption key may be used to encrypt the obtained biometric data of the user, e.g., as derived from the selfie of the user.

After encryption of the biometric data of the user, the encrypted biometric data of the user may be sent from the user device to a processing unit of the identity document. The processing unit may also be part of the chip that is integrated into the identity document. In other words, the identity document may comprise the chip which in turn comprises the storage unit and the processing unit. The connection between the user device and the identity document, e.g., the chip of the identity document, may include a short-range communication technology like NFC or the like. The transmission of the encrypted biometric data of the user to the processing unit of the identity document may be carried out via an encrypted secure communication channel.

After sending the encrypted biometric data of the user from the user device to the identity document, e.g., to the chip of the identity document, the encrypted biometric data of the user may be decrypted by the processing unit of the identity document. The decryption may be performed by using the private encryption key stored in the storage unit of the identity document.

Afterwards, a match between the decrypted biometric data of the user and the biometric reference data stored in the storage unit of the identity document is performed. This match may include a comparison between the decrypted biometric data, e.g., the biometric data from the selfie, and the biometric reference data stored in the storage unit of the identity document. The match may be performed by the processing unit based on a similarity determination between the decrypted biometric data and the biometric reference data.

According to an embodiment, determining a match between the obtained biometric data of the user and the biometric reference data comprises determining a matching score that is indicative of an extent to which the obtained biometric data of the user matches the biometric reference data.

For example, the match may be performed based on a similarity analysis between the decrypted biometric data of the user, e.g., the biometric data obtained from the selfie of the user, and the biometric reference data stored in the storage unit of the identity document.

This means that if there is a sufficient match between the decrypted biometric data of the user and the biometric reference data, the identity verification is affirmative, and sensitive data or information stored on the storage unit of the identity document may be decrypted and/or released for further processing. For example, the user-specific data that may be stored in the storage unit may be decrypted and sent to the user device (in full or partially depending on the specific use case) or another device or application for further processing.

According to an embodiment, the method further comprises decrypting an identification information if the matching score exceeds a threshold matching score.

For example, an encrypted identification information may be stored in the storage unit of the identity document. The identification information may be comprised by the above-mentioned user-specific information. The identification information may be decrypted using a key, for example the private key stored in the storage unit. Once the identification information has been decrypted, it may be shared with the user application, e.g., it may be shared with the SDK. This additional decryption process allows to store the identification information in an encrypted manner so that an additional security for the identification information is provided.

According to an embodiment, the method further comprises transmitting the decrypted identification information from the identity document to the user device.

This allows the user of the user device who has recently taken the image, e.g., the selfie photo, to get access (in full or partially depending on the specific use case) to the sensitive information that is stored in the storage of the identity document. Using this sensitive information will allow the user to get access to various services like banking services, etc. In particular, the decrypted identification information may be passed to a form and/or process for which this identification information is required.

According to an embodiment, the method further comprises establishing a connection between the user device and the identity document based on short-range wireless network.

This connection may be based on a short-range communication technology like NFC or the like. The connection may be established during the identity verification process, i.e., when the user device reads out the unique identifier from the storage unit of the identity document and/or when the encrypted biometric data of the user is sent from the user device to the identity document.

According to an embodiment, the method further comprises reading the unique identifier stored on the identity document by the user device before using the unique identifier to request the public encryption key from the server device and to transmit the public encryption key from the server device to the user device.

In other words, the unique identifier is securely stored in the storage unit of the identity document and will be read out during the verification process. The unique identifier may be required by the user device to request the public encryption key from the server device. As explained above, the public encryption key will be necessitated by the user device to encrypt the biometric data obtained when the user takes the image, e.g., the selfie photo.

According to an embodiment, the method further comprises performing an authentication between the user device and the identity document before reading the unique identifier stored on the identity document by the user device.

That is, the user device, in particular the user application executed on the user device, will initiate the authentication between the user device and the chip of the identity document after the image of the user has been taken by the user using the camera of the user device. This additional authentication between the user device and the chip of the identity document may also be carried out via a short-range communication like NFC, etc. It is a further security check before the unique identifier can be read from the chip of the identity document.

According to an aspect of the invention, a system for verifying an identity of a user is provided. The system may be configured to perform the above-described method of verifying an identity of a user. The system comprises a chip on which biometric reference data and a unique identifier are stored, a user device configured to execute a user application, and a server device. The user application configures the user device to capture an image of a user and to obtain biometric data of the user. The user application further configures the user device to read the unique identifier from the chip of the identity document and to establish a connection to the server device. The user application further configures the user device to request a public encryption key from the server device using the unique identifier and to receive the public encryption key from the server device. The user application further configures the user device to use the received public encryption key to encrypt the obtained biometric data of the user. The user application further configures the user device to transmit the encrypted biometric data of the user to the chip of the identity document. The chip of the identity document is configured to decrypt the encrypted biometric data of the user and to determine a match between the decrypted biometric data and the biometric reference data.

The components and functionalities described with respect to the inventive method of personalizing an identity document and described with respect to the method of verifying an identity of a user also apply to the components and functionalities of the inventive system.

Exemplary embodiments of the invention are explained in more detail below with reference to schematic drawings.
- Fig. 1: shows a schematic representation of a system for verifying an identity of a user.
- Fig. 2: shows a user taking an image with a user device.
- Fig. 3: shows a connection between an identity document and a user device.
- Fig. 4: shows a connection between a server device and a user device.
- Fig. 5: shows another connection between an identity document and a user device.
- Fig. 6: shows a flow diagram for a method of personalizing an identity document.
- Fig. 7: shows a flow diagram for a method of verifying an identity of a user.

In the drawings, identical or functionally identical elements are provided with the same reference signs.

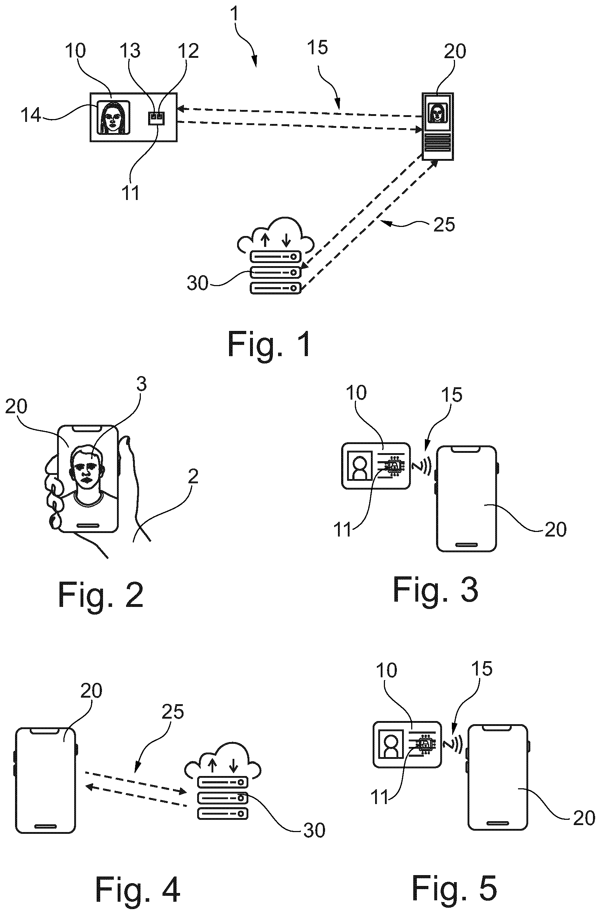

Fig. 1 shows a schematic representation of a system 1 for verifying an identity of a user 2. The system 1 comprises an identity document 10, a user device 20 and a server device 30.

The identity document 10 comprises a chip 11 which may include a storage unit 12 and a processing unit 13. The chip 11 may be a universal integrated circuit card (UICC), e.g., an embedded universal integrated circuit card (eUICC) or an integrated universal integrated circuit card (iUICC). The chip 11 stores encrypted biometric reference data, a unique identifier, a private encryption key and encrypted user-specific information.

The encrypted biometric reference data may be based on image data of a user image 14 present on the identity document 10.

The user device 20 which may be a mobile device, in particular a mobile phone, is configured to execute a user application, for example a software development kit (SDK) from a certain provider. The user application may be executed by the user device 20 during the verification process.

The server device 30 may be a remote server, for example a web server or cloud server that stores the unique identifier and the signed public encryption key which are also stored in the chip 11 of the identity document 10.

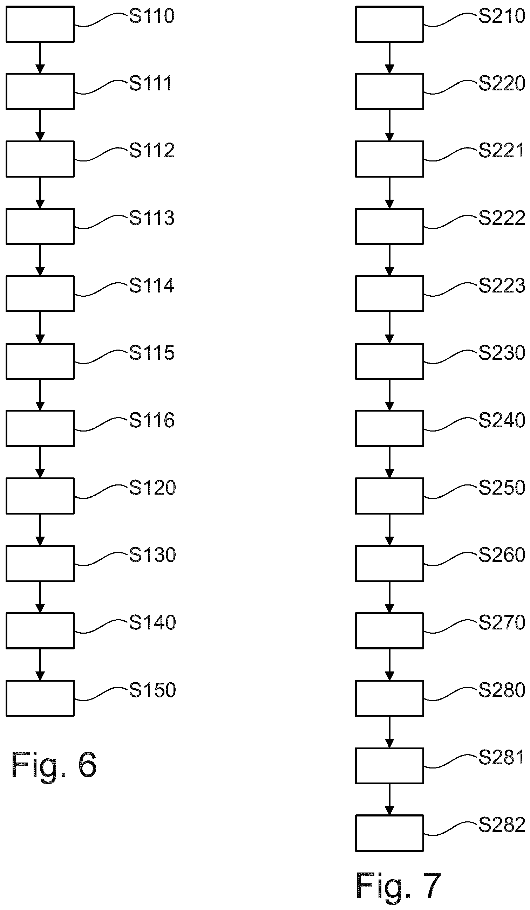

The storage of the unique identifier and the signed public encryption key in the server device 30 may be carried out during the personalization process which is described with respect to Fig. 6 below. Furthermore, the storage of the encrypted biometric reference data, the unique identifier, the private encryption key and the encrypted user-specific information on the chip 11 of the identity document 10 may also be carried out during personalization process described with respect to Fig. 6.

Back to Fig. 1, the user application configures the user device 20 to capture an image 3 of a user 2 and to obtain biometric data of the user 2 (cf. Fig. 2). For example, the user 2 takes a photo of herself or himself, e.g., a selfie, and this photo includes the (real-time) biometric data which is used for the verification process described in the following and with respect to Fig. 7 below. The user application may guide the user 2 through this verification process step by step. After the image 3 of the user 2 has been taken and the biometric data is obtained, the user may be prompted to hold or tap the identity document 10 on the back of the user device 20, for example to place it on the mobile phone's rear side.

Afterwards, an authentication may take place between the user device 20 and the chip 11 of the identity document 10, for example via NFC. After successful authentication, the user device 20 establishes a communication connection 15 to the chip 11 of the identity document 10, thus allowing the user device 20 to read out the unique identifier stored on the chip 11.

After reading the unique identifier from the chip 11, the user application configures the user device 20 to establish a communication connection 25 to the server device 30. The server device 30 may be owned or operated by the above-mentioned provider which also issues the user application, i.e., the SDK.

The user application then configures the user device 20 to request the public encryption key from the server device 30 using the read-out unique identifier and to receive the public encryption key from the server device 30.

The user application configures the user device 20 to use the received public encryption key to encrypt the obtained biometric data of the user 2, i.e., to encrypt the biometric template of the user 2 which has been derived from the selfie photo taken by the user 2 (cf. again Fig. 2).

Afterwards, the user application configures the user device 20 to transmit the encrypted biometric data to the chip 11 of the identity document 10. The transmission of the biometric data to the chip 11 may be carried out using a secure encrypted communication channel established between the user device 20 and the chip 11.

After receiving the encrypted biometric data from the user device 20, the chip 11 may decrypt the encrypted biometric data of the user 2 and determine a match between the decrypted biometric data and the biometric reference data which is already stored on the chip 11.

Afterwards, if a comparison between the decrypted biometric data and the biometric reference data has indicated that the decrypted biometric data sufficiently matches the biometric reference data, for example based on a matching score, the chip 11 may further decrypt an identification information, e.g., the user specific information which is stored on the chip 11. For example, if the matching score exceeds a threshold matching score, the identification information may be automatically decrypted by the chip 11 and transmitted to the user device 20. However, if the matching score does not exceed the threshold matching score or is below the threshold matching score, the chip 11 may not carry out the decryption of the identification information. In this latter case, a possible fraud or fake photo may be recognized and/or indicated instead, and the identification information may not be transmitted to the user device 20.

In this manner, it is possible to further improve the security during identity verification processes in which a user has to verify her or his identity to get access to corresponding online services.

Figures 2 to 5 show a partial sequence for the method of verifying an identity of the user 2. In particular, these figures visualize the main verification steps performed by the system 1 as described with respect to Fig. 1.

Fig. 2 shows the user 2 taking the image 3 with the user device 20. The user device 20 is present in the form of a mobile phone and a camera is used to take the image 3, e.g., a photo, of the user 2. The (real-time) biometric data of the user 2 can then be derived from the image 3.

Fig. 3 shows the generation of a wireless connection 15 between the identity document 10 and the user device 20. In particular, the user device 20 establishes a short-range communication connection 15, e.g., based on an NFC connection, to the chip 11 of the identity document 10. This connection 15 is used to carry out the authentication between the user device 20 and the chip 11 and to read out the unique identifier from the chip 11.

Fig. 4 shows the generation of a wireless connection 25 between the user device 20 and the server device 30. In particular, the user device 20 establishes a long-range communication connection 25 to the server device 30. This connection 25 is used to transmit the read-out data with respect to the unique identifier or the unique identifier itself to the server device 30. In response, to transmitting the unique identifier to the server device 30, the server device 30 sends the signed public encryption key to the user device 20 where the signed public encryption key is used to encrypt the biometric data obtained from the image 3.

Fig. 5 shows another short-range connection 15 between the user device 20 and the chip 11 of the identity document 10. In particular, the user device 20 again establishes a short-range communication connection 15, e.g., based on an NFC connection, to the chip 11 of the identity document 10, or maintains the short-range communication connection 15 generated in the step shown in Fig. 3. This connection 15 is used to send the encrypted biometric data from the user device 20 to the chip 11 where the encrypted biometric data is decrypted using the private encryption key stored on the chip 11. After decryption of the received biometric data, the decrypted biometric data is compared with the biometric reference data already stored on the chip 11. As the stored biometric reference data may also be encrypted, it may also be decrypted before the matching, for example using the stored private encryption key.

Then, the matching between the biometric data obtained from the selfie photo is compared with the biometric reference data stored on the chip 11 as described above. If the biometric data sufficiently matches with the biometric reference data, the chip 11 may decrypt identification information, e.g., the user-specific information, stored on the chip 11 and send them to the user device 20 where it can be used for further processing or further applications.

Fig. 6 shows a flow diagram for a method of personalizing an identity document 10.

In a step S110 of the method, biometric reference data of a user is provided based on image data from an image 14 of the user (cf. Fig. 1). The biometric reference data of the user may include physical characteristics of the user derivable from the image 14 of the user. The image 14 of the user may be a photo of the user present on the identity document 10.

In another step S111 of the method, a key pair including a private encryption key and the public encryption key is provided.

In another step S112 of the method, the private encryption key is stored in a storage unit 12 of the identity document 10.

In another step S113 of the method, the public encryption key is signed.

In another step S114 of the method, the signed public encryption key is provided for storage in a server device 30.

In another step S115 of the method, user-specific information is provided.

In another step S116 of the method, the user-specific information is stored in the storage unit 12 of the identity document 10.

In another step S120 of the method, the biometric reference data of the user is encrypted using a public encryption key in order to provide encrypted biometric reference data of the user.

In another step S130 of the method, a unique identifier is provided.

In another step S140 of the method, the encrypted biometric reference data of the user and the unique identifier are stored in the storage unit 12 of the identity document 10.

In another step S150 of the method, the public encryption key and/or the unique identifier is provided to a server device 30 where it is stored as well.

The method steps may be performed in the indicated order.

Fig. 7 shows a flow diagram for a method of verifying an identity of a user 2 (cf. Fig. 2). The method may be performed by the system 1 as described with respect to Fig. 1 to which reference is also made.

In a step S210 of the method, an identity document 10 is provided which has stored thereon biometric reference data and a unique identifier.

In another step S220 of the method, an image 3 of a user 2 is captured with a user device 20 to obtain biometric data of the user 2.

In another step S221 of the method, a connection 15 between the user device 20 and the identity document 10 is established based on a short-range wireless network.

In another step S222 of the method, an authentication is performed between the user device 20 and the identity document 10.

In another step S223 of the method, the unique identifier stored on the identity document 10 is read by the user device 20.

In another step S230 of the method, a connection 25 between the user device 20 and a server device 30 is established.

In another step S240 of the method, the unique identifier reading is used to request a public encryption key from the server device 30 and to transmit the public encryption key from the server device 30 to the user device 20.

In another step S250 of the method, the transmitted public encryption key is used to encrypt the obtained biometric data of the user 2.

In another step S260 of the method, the encrypted biometric data of the user 2 is transmitted from the user device 20 to a processing unit 13 of the identity document 10.

In another step S270 of the method, the encrypted biometric data of the user 2 is decrypted by the processing unit 13 of the identity document 10.

In another step S280 of the method, a match between the decrypted biometric data of the user 2 and the biometric reference data is determined by the processing unit 13 of the identity document 10. Determining a match between the decrypted biometric data of the user 2 and the biometric reference data may comprise determining a matching score that is indicative of an extent to which the decrypted biometric data of the user 2 matches the biometric reference data.

In another step S281 of the method, an identification information, e.g., user-specific information, is decrypted by the processing unit 13 if the matching score exceeds a threshold matching score.

In another step S282 of the method, the decrypted identification information is transmitted from the identity document 10 to the user device 20.

The method steps may be performed in the indicated order.

## Claims

1. A method of personalizing an identity document (10), comprising:
providing biometric reference data of a user based on image data from an image of the user (S110);
encrypting the biometric reference data of the user using a public encryption key in order to provide encrypted biometric reference data of the user (S120);
providing a unique identifier (S130);
storing the encrypted biometric reference data of the user and the unique identifier in a storage unit (12) of the identity document (10, S140).

2. The method according to claim 1, further comprising:
providing a key pair including a private encryption key and the public encryption key (S111);
storing the private encryption key in the storage unit (12) of the identity document (10, S112).

3. The method according to any one of the preceding claims, further comprising:
signing the public encryption key (S113);
providing the signed public encryption key for storage in a server device (30, S114).

4. The method according to any one of the preceding claims, further comprising:
providing user-specific information (S115);
storing the user-specific information in the storage unit (12) of the identity document (10, S116).

5. The method according to any one of the preceding claims, further comprising:
providing the public encryption key and/or the unique identifier to a server device (30, S150).

6. The method according to any one of the preceding claims,
wherein the biometric reference data of the user includes physical characteristics of the user derivable from the image (14) of the user.

7. The method according to any one of the preceding claims,
wherein the image (14) of the user is a photo of the user contained on the identity document (10).

8. A method of verifying an identity of a user (2), comprising:
providing an identity document (10) having stored thereon biometric reference data and a unique identifier (S210);
capturing an image (3) of a user (2) with a user device (20) to obtain biometric data of the user (2, S220);
establishing a connection (25) between the user device (20) and a server device (30, S230);
using the unique identifier to request a public encryption key from the server device (30) and to transmit the public encryption key from the server device (30) to the user device (20, S240);
using the transmitted public encryption key to encrypt the obtained biometric data of the user (2, S250);
transmitting the encrypted biometric data of the user (2) from the user device (20) to a processing unit (13) of the identity document (10, S260);
decrypting the encrypted biometric data of the user (2) by the processing unit (13) of the identity document (10, S270);
determining a match between the decrypted biometric data of the user (2) and the biometric reference data by the processing unit (13) of the identity document (10, S280).

9. The method according to claim 8,
wherein determining a match between the decrypted biometric data of the user (2) and the biometric reference data comprises determining a matching score that is indicative of an extent to which the decrypted biometric data of the user (2) matches the biometric reference data.

10. The method according to claim 9, further comprising:
decrypting an identification information if the matching score exceeds a threshold matching score (S281).

11. The method according to claim 10, further comprising:
transmitting the decrypted identification information from the identity document (10) to the user device (20, S282).

12. The method according to any one of claims 8 to 11, further comprising:
establishing a connection (15) between the user device (20) and the identity document (10) based on a short-range wireless network (S221).

13. The method according to any one of claims 8 to 12, further comprising:
reading the unique identifier stored on the identity document (10) by the user device (20) before using the unique identifier to request the public encryption key from the server device (30) and to transmit the public encryption key from the server device (30) to the user device (20, S223).

14. The method according to any one of claims 8 to 13, further comprising:
performing an authentication between the user device (20) and the identity document (10) before reading the unique identifier stored on the identity document (10) by the user device (20, S222).

15. System (1) for verifying an identity of a user (2), comprising:
an identity document (10) comprising a chip (11) on which biometric reference data and a unique identifier are stored;
a user device (20) configured to execute a user application;
a server device (30);
wherein the user application is configured to cause the user device (20) to capture an image (3) of a user (2) and to obtain biometric data of the user (2);
wherein the user application is configured to cause the user device (20) to read the unique identifier from the chip (11) of the identity document (10) and to establish a connection (25) to the server device (30);
wherein the user application is configured to cause the user device (20) to request a public encryption key from the server device (30) using the unique identifier and to receive the public encryption key from the server device (30);
wherein the user application is configured to cause the user device (20) to use the received public encryption key to encrypt the obtained biometric data of the user (2);
wherein the user application is configured to cause the user device (20) to transmit the encrypted biometric data of the user (2) to the chip (11) of the identity document (10);
wherein the chip (11) of the identity document (10) is configured to decrypt the encrypted biometric data of the user (2) and to determine a match between the decrypted biometric data and the biometric reference data.

## Amended claims

### Amended claims in accordance with Rule 137(2) EPC.

1. A method of personalizing an identity document (10), comprising:
providing biometric reference data of a user based on image data from an image of the user (S110);
providing a key pair including a private encryption key and a public encryption key (S111);
storing the private encryption key in a storage unit (12) of the identity document (10, S112)
encrypting the biometric reference data of the user using the public encryption key in order to provide encrypted biometric reference data of the user (S120);
providing a unique identifier (S130);
storing the encrypted biometric reference data of the user and the unique identifier in the storage unit (12) of the identity document (10, 5140).

2. The method according to any one of the preceding claims, further comprising:
signing the public encryption key (S113);
providing the signed public encryption key for storage in a server device (30, S114).

3. The method according to any one of the preceding claims, further comprising:
providing user-specific information (S115);
storing the user-specific information in the storage unit (12) of the identity document (10, S116).

4. The method according to any one of the preceding claims, further comprising:
providing the public encryption key and/or the unique identifier to a server device (30, S150).

5. The method according to any one of the preceding claims,
wherein the biometric reference data of the user includes physical characteristics of the user derivable from the image (14) of the user.

6. The method according to any one of the preceding claims,
wherein the image (14) of the user is a photo of the user contained on the identity document (10).

7. A method of verifying an identity of a user (2), comprising:
providing an identity document (10) having stored thereon biometric reference data and a unique identifier (S210);
capturing an image (3) of a user (2) with a user device (20) to obtain biometric data of the user (2, S220);
establishing a connection (25) between the user device (20) and a server device (30, S230);
using the unique identifier to request a public encryption key from the server device (30) and to transmit the public encryption key from the server device (30) to the user device (20, S240);
using the transmitted public encryption key to encrypt the obtained biometric data of the user (2, S250);
transmitting the encrypted biometric data of the user (2) from the user device (20) to a processing unit (13) of the identity document (10, S260);
decrypting the encrypted biometric data of the user (2) by the processing unit (13) of the identity document (10, S270);
determining a match between the decrypted biometric data of the user (2) and the biometric reference data by the processing unit (13) of the identity document (10, S280).

8. The method according to claim 7,
wherein determining a match between the decrypted biometric data of the user (2) and the biometric reference data comprises determining a matching score that is indicative of an extent to which the decrypted biometric data of the user (2) matches the biometric reference data.

9. The method according to claim 8, further comprising:
decrypting an identification information if the matching score exceeds a threshold matching score (S281).

10. The method according to claim 9, further comprising:
transmitting the decrypted identification information from the identity document (10) to the user device (20, S282).

11. The method according to any one of claims 7 to 10, further comprising:
establishing a connection (15) between the user device (20) and the identity document (10) based on a short-range wireless network (S221).

12. The method according to any one of claims 7 to 11, further comprising:
reading the unique identifier stored on the identity document (10) by the user device (20) before using the unique identifier to request the public encryption key from the server device (30) and to transmit the public encryption key from the server device (30) to the user device (20, S223).

13. The method according to any one of claims 7 to 12, further comprising:
performing an authentication between the user device (20) and the identity document (10) before reading the unique identifier stored on the identity document (10) by the user device (20, S222).

14. System (1) for verifying an identity of a user (2), comprising:
an identity document (10) comprising a chip (11) on which biometric reference data and a unique identifier are stored;
a user device (20) configured to execute a user application;
a server device (30);
wherein the user application is configured to cause the user device (20) to capture an image (3) of a user (2) and to obtain biometric data of the user (2);
wherein the user application is configured to cause the user device (20) to read the unique identifier from the chip (11) of the identity document (10) and to establish a connection (25) to the server device (30);
wherein the user application is configured to cause the user device (20) to request a public encryption key from the server device (30) using the unique identifier and to receive the public encryption key from the server device (30);
wherein the user application is configured to cause the user device (20) to use the received public encryption key to encrypt the obtained biometric data of the user (2);
wherein the user application is configured to cause the user device (20) to transmit the encrypted biometric data of the user (2) to the chip (11) of the identity document (10);
wherein the chip (11) of the identity document (10) is configured to decrypt the encrypted biometric data of the user (2) and to determine a match between the decrypted biometric data and the biometric reference data.
